# EUROPEAN PATENT APPLICATION

(11) **EP 4 841 588 A1**
(43) Date of publication of application: **18.11.2026**
(21) Application number: 25275034.4
(22) Date of filing: 13.05.2025
(51) Int. Cl.: G06V 20/56

(54) **OBJECT IDENTIFICATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a computer-implemented method of identifying a static object, the computer-implemented method comprising: generating an expected vector field representing a movement of an environment in front of a vehicle, relative to the vehicle; capturing a plurality of image frames of the environment as the vehicle moves into the environment; calculating an actual vector field of the environment from the plurality of image frames; identifying a region in the actual vector field having vectors aligned with vectors of a corresponding region in the expected vector field, the vectors of the actual vector field having substantially the same magnitude; and classifying the identified region as a static object.

## Description

### FIELD

The subject-matter of the present disclosure relates to computer-implemented methods of identifying a static object, computer-implemented methods of extracting a static object from an image, transitory, or non-transitory, computer-readable media, and vehicles.

### BACKGROUND

Identifying static objects from images captured by cameras of vehicles moving through an environment can be difficult. Typically, this may be done by identifying all objects and then monitoring their relative positions, and thus speed, relative to the vehicle over time. This can be computationally expensive and in busy environments it may not be possible to complete the analysis in sufficient time, e.g. a time between image frames, so some objects may be missed.

It is an aim of the present invention to address such problems and improve on the prior art.

### SUMMARY

According to an aspect of the present disclosure, there is provided a computer-implemented method of identifying a static object. The computer-implemented method comprising: generating an expected vector field representing a movement of an environment in front of a vehicle, relative to the vehicle; capturing a plurality of image frames of the environment as the vehicle moves into the environment; calculating an actual vector field of the environment from the plurality of images; calculating a scalar field of vector scaling factors of the actual vector field with reference to the expected vector field; grouping regions of the scalar field having substantially the same scaling factor; identifying a region of the grouped regions having vectors substantially aligned between the actual and expected vector fields; and classifying the identified region as a static object.

In this way, static objects can be identified more quickly. This may be because no classification of the object is required. Instead, the present aspect uses generic regions. The classification can occur later and thus reduce computation burden.

In an embodiment, the computer-implemented method further comprises: calculating a distance to the identified region based on an expected distance to the region and a scaling factor.

In an embodiment, calculating the distance to the identified region based on the expected distance to the region and the scaling factor comprises using :
${d}_{region} = {d}_{expected} ⋅ γ ,$
where *d_{region}* is the actual distance to the region, *d_{expected}* is the expected distance to the region, and y is the vector scaling factor.

In an embodiment, the computer-implemented method further comprises: calculating the vector scaling factor, y, using:
$γ = \frac{\left|{{V}^{⇀}}_{expected}\right|}{\left|{{V}^{⇀}}_{measured}\right|}$, wherein ${{V}^{⇀}}_{expected}$ is the expected vector field, and ${{V}^{⇀}}_{measured}$ is the actual vector field.

In an embodiment, the computer-implemented method further comprises: updating the expected vector field periodically.

In an embodiment, the computer-implemented method further comprises updating the expected vector field at a rate synchronised with updating the actual vector field.

In an embodiment, the expected vector field and/or the actual vector field includes a direction and a magnitude for respective changes in positions of respective points in the environment over a time between image frames.

In an embodiment, generating an expected vector field comprises: generating the expected vector field based on a dynamic parameter of the vehicle and a camera property.

In an embodiment, the dynamic parameter of the vehicle is one of a speed of the vehicle, an acceleration of the vehicle, a heading of the vehicle, and a turn radius of the vehicle.

In an embodiment, the camera property includes at least one of a frame rate and a lens. The lens may be taken to mean a lens focal length and a lens distortion.

In an embodiment, generating an actual vector field comprises: identifying points in an image frame of the plurality of image frames; identifying the points in a next image frame of the plurality of image frames; and calculating a change in position of the points between the image frame and the next image frame.

In an embodiment, the points include points selected from a list of points including: an edge, a corner, an object feature, and a colour.

In an embodiment, the computer-implemented method further comprises: identifying sudden changes in differences in the identified region.

According to an aspect of the present disclosure, there is provided a computer-implemented method of extracting a static object from an image, the computer-implemented method comprising: identifying a static object using the computer-implemented method according to any preceding aspect or embodiment; generating a semantic segmentation map to segment the static object from the image frame; and extracting the segmented static object from the image.

According to an aspect of the present disclosure, there is provided a computer-implemented method of constructing a three-dimensional point cloud, the computer-implemented method comprising: identifying a static object using the computer-implemented method according to any preceding aspect or embodiment; identifying a position of the static object; and constructing the three-dimensional point cloud including a plurality of points at the position of the static object.

According to an aspect of the present disclosure, there is provided a transitory, or non-transitory, computer-readable medium having instructions stored thereon that when executed by at least one processor, causes the at least one processor to perform the computer-implemented method of any preceding aspect or embodiment.

According to an aspect of the present disclosure, there is provided a vehicle comprising: a camera for capturing images of an environment into which the vehicle is moving; at least one processor; and storage storing instructions that when executed by the at least one processor causes the at least one processor to perform the computer-implemented method of any preceding aspect or embodiment.

In an embodiment, the vehicle may be a military vehicle.

### BRIEF DESCRIPTION OF DRAWINGS

The subject-matter of the present disclosure is best described with reference to the accompanying figures, in which:
Figure 1 shows a schematic view of a vehicle according to at least one embodiment;
Figure 2 shows a schematic view of an expected vector field representing an air environment into which the vehicle of Figure 1 is moving, according to at least one embodiment;
Figure 3 shows a schematic view of an expected vector field representing a land environment into which the vehicle of Figure 1 is moving, according to at least one embodiment;
Figure 4 is a schematic view of an actual vector field representing a land environment into which the vehicle is moving, and which includes a static object, according to at least one embodiment;
Figure 5 shows a schematic view of an actual vector field representing a land environment into which the vehicle is moving, an which includes a moving object, according to at least one embodiment;
Figure 6 is a flow chart summarising a computer-implemented method of identifying a static object, according to at least one embodiment;
Figure 7 is a flow chart summarising a computer-implemented method of identifying a moving object, according to at least one embodiment;
Figure 8 is a flow chart summarising a computer-implemented method of extracting a static object from an image, according to at least one embodiment;
Figure 9 is a flow chart summarising a computer-implemented method of estimating a velocity of a moving object, according to at least one embodiment; and
Figure 10 is a flow chart summarising a computer-implemented method of constructing a three-dimensional point cloud, according to at least one embodiment.

### DESCRIPTION OF EMBODIMENTS

Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

The embodiments described herein may be embodied as sets of instructions stored as electronic data in one or more storage media. Specifically, the instructions may be provided on a transitory or non-transitory computer-readable media. When executed by the processor, the processor is configured to perform the various methods described in the following embodiments. In this way, the methods may be computer-implemented methods. In particular, the processor and a storage including the instructions may be incorporated into a vehicle.

Whilst the following embodiments provide specific illustrative examples, those illustrative examples should not be taken as limiting, and the scope of protection is defined by the claims. Features from specific embodiments may be used in combination with features from other embodiments without extending the subject-matter beyond the content of the present disclosure.

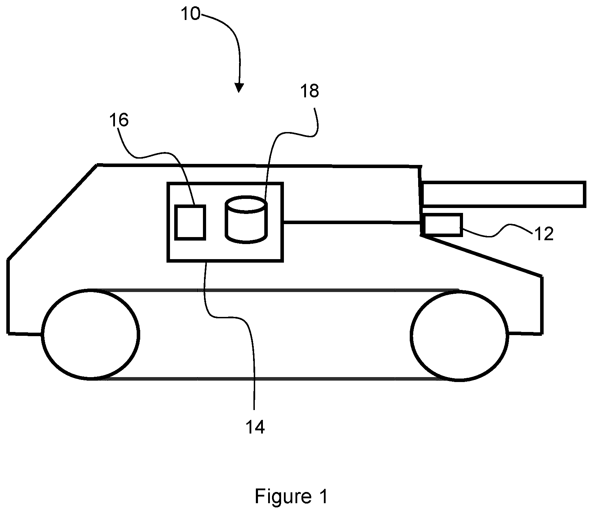

With reference to Figure 1, a vehicle 10 includes at least one camera 12 mounted to a body of the vehicle. The camera captures a plurality of image frames of an environment into which the vehicle is moving. The vehicle 10 also includes a computer 14. The computer 14 includes the storage 16 and the least one processor 18. The vehicle may be a military vehicle, e.g. a tank. The vehicle may be an uncrewed vehicle, e.g. an autonomous vehicle. The vehicle may be a land vehicle (e.g. a tank), a watercraft (e.g. an underwater autonomous vehicle), or an aircraft (e.g. a drone).

The instructions on storage may be considered as a computer-implemented method.

The computer implemented method may be a computer-implemented method of identifying a static object.

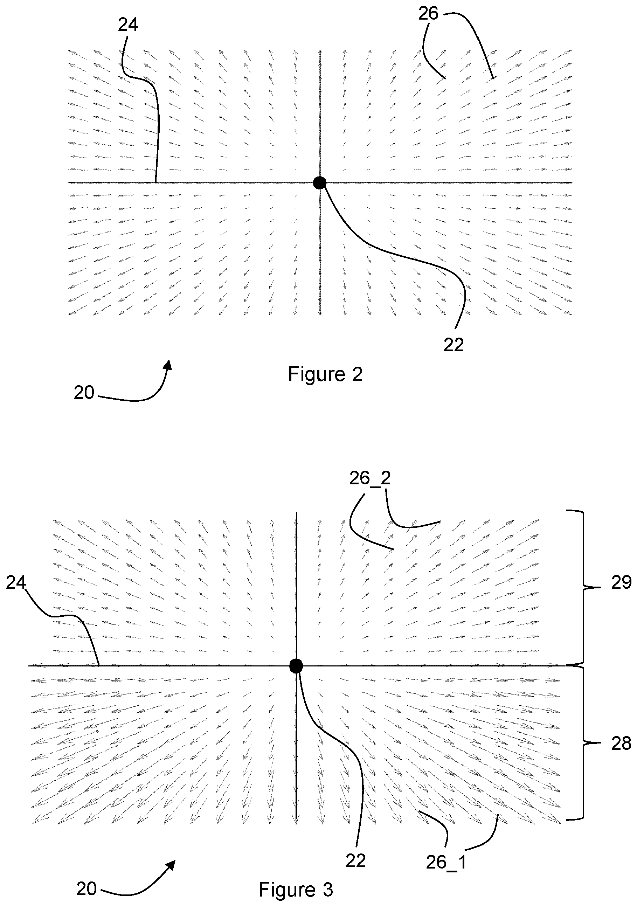

With reference to Figure 2, the computer-implemented method comprises generating an expected vector field 20 representing a movement of an environment in front of a vehicle, relative to the vehicle. The expected vector field includes an origin 22, a horizon 24, and a plurality of vectors 26. The vectors represent changes in position over a time interval of points within the environment. The vectors may thus represent a relative speed of the environment relative to the vehicle. This relative speed matches a speed of the vehicle.

The vectors include a magnitude, e.g. a speed, and a direction. The vectors may be in three-dimensions, e.g. horizontal, vertical, and depth. An origin vector associated with the origin 22 may be only in a depth direction. The direction may be represented as an angle relative to the origin vector. The direction may be a direction generally toward or away from the vehicle. The environment may be assumed to be vacant. When the environment is a sky or underwater, and does not include land extending between the vehicle and the horizon 24, the vectors may be divergent. In this way, the vector directions point generally toward the vehicle. If the vehicle 10 were reversing, the expected vector field 20 may be converging. In a converging field, the vector directions point generally away from the vehicle. In both converging and diverging vector fields, the magnitudes of the vectors increases with increasing distance from the origin. This is because the vehicle is not stationary.

The expected vector field includes a direction and a magnitude for respective changes in positions of respective points in the environment over a time between image frames.

Generating the expected vector field may be based on a dynamic parameter of the vehicle and a camera property. The dynamic parameter of the vehicle is one of a speed of the vehicle, an acceleration of the vehicle, a heading of the vehicle, and/or a turn radius of the vehicle. For example, the speed of the vehicle may match the relative speed of each of the vectors. The acceleration may help predict the relative speed at future time steps, e.g. subsequent image frames. The heading and turn radius of the vehicle may result in changes in direction of the vectors in the expected vector field.

The camera property may include at least one of frame rate and a lens, or at least lens type. Frame rate may affect a length of the vectors because the vector shows a change in position of a point between frames.

With reference to Figure 3, a land vehicle will have land 28 extending between the vehicle and the horizon 24. Points of the land 28, or ground, will be nearer to the vehicle than points in the sky 29. Therefore, the points on the land 28 will be moving relatively faster than those in the sky. Therefore, the magnitudes, e.g. the vector lengths, will be bigger (or longer) for the land vectors 26_1 compared to the sky vectors 26_2 above the horizon 24.

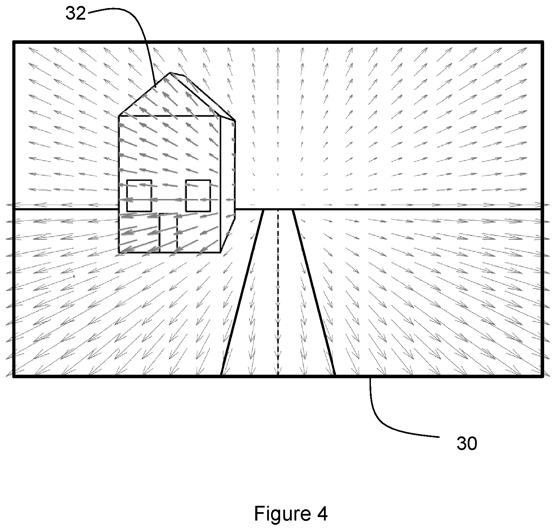

With reference to Figure 4, the method also comprises generating, or calculating, an actual vector field 30, which may comprise: identifying points in an image frame of the plurality of image frames; identifying the points in a next image frame of the plurality of image frames; and calculating a change in position of the points between the image frame and the next image frame. The points include points selected from a list of points including: an edge, a corner, an object feature, and a colour. In other words, the points includes one or more of an edge, a corner, an object feature, or a colour.

In the same way as the expected vector field, the actual vector field includes a plurality of vectors. Each of those vectors corresponds to a change in the point between the frames, e.g. the adjacent frames. This may be a positional change, as above. Since the frame rate of the camera is known, the change in position can provide a speed of the point, which may be a speed relative to the vehicle. The positional changes may be represented as the vectors, include a magnitude denoting speed, and a direction. The direction may point generally toward the vehicle for diverging fields and may point generally away for converging fields. The direction may be an angle compared to the origin vector which only has a depth direction.

The method also comprises calculating a scalar field of vector scaling factors, γ, of the actual vector field with reference to the expected vector field. The vector scaling factor formula is provided below, and equates to the expected vector divided by the actual vector for a corresponding point in the respective vector fields. The scalar field is a collection of vector scaling factors across the entire image, or environment.

The method also comprises grouping regions of the scalar field having substantially the same scaling factor. In other words, adjacent points having the same scaling factor may be grouped as a region. When performed across the entire field, there may be a plurality of regions covering the entire environment, or image, except for any regions which are moving (see below). Therefore, the regions may be joined, and every point that is static within the environment may belong to one of the regions.

The method comprises identifying a region of the grouped regions having vectors substantially aligned between the actual and expected vector fields. The term substantially aligned may be taken to mean misaligned within an alignment tolerance. Completely aligned vectors will be at the expected distance. Misaligned vectors which are within an alignment tolerance may be deemed to be static objects, which are closer than the expected distance. If the alignment is above the alignment threshold, the objects may not be static.

The method also comprises classifying the identified region as a static object. This may be achieved by labelling that region as static.

The method may further comprise calculating a distance to the identified region based on an expected distance to the region and a scaling factor.

Calculating the distance to the identified region based on the expected distance to the region and the scaling factor comprises using :
*γd_{region} = d_{expected}. γ,* where *d_{region}* is the actual distance to the region, *d_{expected}* is the expected distance to the region, and y is the vector scaling factor.

Calculating the vector scaling factor, y, uses: $γ = \frac{\left|{{V}^{⇀}}_{expected}\right|}{\left|{{V}^{⇀}}_{measured}\right|} ,$ where ${{V}^{⇀}}_{expected}$ is the expected vector field, and ${{V}^{⇀}}_{measured}$ is the actual vector field.

The expected distance to the region is known because the environment used to generate the expected vector field is known or predetermined, and all points within the environment have known distances.

The method may comprise updating the expected vector field periodically. The actual vector period may also be updated periodically. Those vector fields may be updated in a synchronised manner, in other words using the same synchronised rate. The rate may match a frame rate of the camera. Therefore, each time a new image is captured, the expected vector field and the actual vector field can be updated. Since the expected vector field is predetermined, it may be extracted from a map or a repository and localised to the camera using known techniques.

The method may further comprise identifying sudden changes in differences in the identified region. In this way, temporarily occluded objects can be detected when they suddenly appear or suddenly disappear.

There may also be provided an aspect of the present disclosure which uses this method of identifying a static object to extract the object so that it can be used for downstream models such as object recognition. Therefore, there is also provided a computer-implemented method of extracting a static object from an image. The computer-implemented method comprises: identifying a static object using the computer-implemented method described above; generating a semantic segmentation map to segment the static object from the image frame; and extracting the segmented static object from the image. The semantic segmentation map may be generated using a learned model, such as a machine learning model including, for example, a neural network. The extracted image can be input to a downstream model trained to perform a machine vision task, such as object recognition where the object can be classified semantically. Other tasks may include trajectory prediction, where the trajectory of the object is predicted over time. This can feed into trajectory generation for the vehicle so the vehicle can take account of the predicted trajectory of the object either to avoid the other object or catch the other object in a pursuer-evader or evader-pursuer scenario.

Another downstream model may be a model for generating a three-dimensional point cloud. In an aspect, the model may perform a computer-implemented method such as constructing the three-dimensional point cloud, the method comprising: identifying a static object using the foregoing computer-implemented method. The method also includes identifying a position of the static object. This may involve calculating an actual distance to the region, and determining its horizontal and vertical positions in the image frame using conventional techniques. The method also comprises constructing the three-dimensional points cloud including a plurality of points at the position of the static object. The plurality of points may be located at edges, corners, or other features of the region, at the depth associated with the actual distance. When the entire image consists of static objects, the entire image is covered in regions described above. Those regions will be reflected in the point cloud across the entire environment, or image.

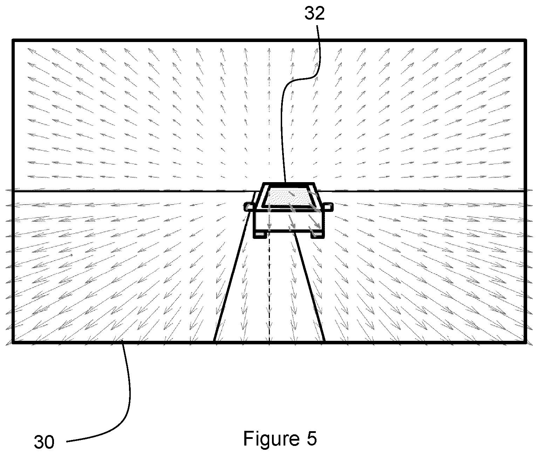

With reference to Figure 5, in another embodiment, there is provided a computer-implemented method of identifying a moving object. The method comprises generating an expected vector field representing the anticipated relative movement of an environment in front of a vehicle 10. The expected vector field is the same as the static object identification method.

The method also comprises capturing a plurality of image frames of the environment as the vehicle moves into the environment, in the same way as the static object identification method. In addition, the method comprises calculating an actual vector field of the environment from the plurality of images, in the same way as the static object identification method.

Other features of the moving object identification method are the same as those of the static object detection method, aside from identifying a region and classifying the identified region as an object.

For the moving object detection method, the method includes identifying a region in the actual vector field that is not aligned with the corresponding region in the expected vector field. As with the static object identification method, corresponding region is one which positionally the same in the expected and actual vector fields. The vector fields not being aligned may be taken to mean that the angles of the vectors within the vector fields are different relative to the origin vector. Expressed alternatively, the vectors associated with points in the region in the expected vector field may not be parallel, or may have a relative angle greater than 0 compared, with corresponding vectors in the region in the actual vector field. The fact that the actual vector field is not aligned with the expected vector field means that the region is travelling at a different relative velocity to the environment. This can equate to a moving object. This is because any moving object is highly unlikely to be moving exactly in the same trajectory as the vehicle 10 for an extended period of time. Even on a very straight flat road, another vehicle in front will deviate lateral position with its lane and there is likely to be undulations in levelness of the ground. Any bends in a road, and the other vehicle will be travelling on a different trajectory. That is to say the method may, in some circumstances, incorrectly not classify a moving object but that this state of error is highly unlikely to persist for a significant period of time.

The method of extracting a moving object may be performed using the foregoing method of identifying a moving object and may be summarised as including: identifying a moving object using the computer-implemented method described above; generating a semantic segmentation map to segment the moving object from the image frame; and extracting the segmented moving object from the image.

The method of constructing a three-dimensional point cloud may be performed in the same way but with the dynamic object rather than the static object. When performing both methods in combination, the three-dimensional point cloud will include points for both static objects and moving objects.

In another aspect of the present disclosure, there is provided a computer-implemented method of estimating a relative velocity of a moving object. The computer-implemented method comprises: receiving a plurality of images from a camera mounted to an entity moving through an environment; estimating, or generating, an expected vector field representing an environment in front of the entity, or at least representing an environment, or a relative velocity of an environment in front of the entity; calculating an actual vector field from the plurality of images, the actual vector field representing an actual velocity of the environment relative to the entity; and identifying a region in the actual vector field that is not aligned with a corresponding region in the expected vector field as an object, as with the method of identifying the moving object. The entity may be the vehicle.

The method may further comprising: estimating a divergence in the differential vector field, wherein estimating the velocity of the identified object based on the differential vector field comprises: estimating the velocity of the identified object based on the divergence in the differential vector field. Divergence may refer to the vectors generally separating in a direction toward the camera.

This method may further comprise classifying the identified object using a classification algorithm.

This method also comprises identifying a differential vector field for the identified region and a dimension associated with the identified region.

The dimension associated with the region is an estimated distance to the identified region, wherein estimating the distance to the identified region uses:
${d}_{region} = β \frac{{L}_{object}}{{L}_{region}} ,$
where *d_{region}* is the estimated distance to the region, *L_{region}* is a dimension of the object in the plurality of images, *L_{object}* is a dimension of the object obtained using known information about the classified object, and *β* is a camera specific scaling factor.

The known information may be obtained from a look-up table for a classified object. The dimension of the object may be one of height, width, and length. Those distances may be maximum distances or average distances. The height, width, and length may also be the dimensions of a bounding box surrounding the object once it has been classified depending on the model used to classify the object. The dimension of the object in the plurality of images may be a real dimension, e.g. it's measured height, width, or length, or may be a number of pixels used to represent the object.

The method further comprises discounting the region if the region has a smaller size than a classification threshold. The size may be the dimension of the object obtained using known information. For example, a fly has a small size, and so can be discounted. A building has a comparatively larger size and so should not be discounted. The classification threshold may be a dimension, and may be predetermined. For example, the classification threshold may be a predetermined length, width, or height, of a known object.

The method also comprises estimating the velocity of the identified object based on the differential vector field and the dimension associated with the identified region.

Estimating the velocity of the identified object comprises calculating a relative transverse speed of the identified object using:
${v}_{region ⊥} = {ψ}_{region} ∗ \frac{{d}_{region}}{{d}_{expected}} ,$
where *ψ_{region}* is an uncalibrated relative transverse speed of the object, *v*_{*region* ⊥} is the expected relative velocity of the object, *d_{region}* is the estimated distance to the region, and *d_{expected}* is an expected distance to the region. The term uncalibrated means its transverse speed without taking into account a distance between the object and the camera. Thus the term calibrated may be taken to mean the relative transverse speed taking into account a distance between the object and the camera. In this way, the expected relative velocity of the object can take into account its distance to the camera, such that, for example, a fly close to the camera and a fighter jet far from the camera, which appear to be moving at the same speed when uncalibrated, can be calibrated such that their expected transverse velocity is more accurate.

Estimating the velocity of the identified object further comprises: calculating the uncalibrated relative transverse speed of the object using:
${ψ}_{region ⊥} = \left|{{V}^{⇀}}_{measured}\right| - \left|{{V}^{⇀}}_{expected}\right|$
where *ψ*_{*region*⊥} is the uncalibrated relative transverse speed of the object, ${{V}^{⇀}}_{expected}$ is the expected vector field, and ${{V}^{⇀}}_{measured}$ is the measured, or actual, vector field.

Estimating the velocity of the identified object comprises calculating a relative longitudinal speed of the identified region using:
${v}_{\left.region\right‖} = {v}_{expected} ⋅ {ζ}_{region} ⋅ \frac{{d}_{region}}{{d}_{expected}} ,$
where *ζ_{region}* is a vector field divergence ratio of the region, *v_{expected}*is an expected relative longitudinal speed of the object, *v_{region}*is an estimated relative longitudinal speed of the object, *d_{region}* is the estimated distance to the region, and *d_{expected}* is an expected distance to the region. The expected relative longitudinal speed of the object is equal to the vehicle speed because the expected region is part of the environment not including an object, and thus has equal magnitude, opposite direction, velocity to the vehicle. The vehicle speed is known from various means and sensors, including odometry.
calculating the vector field ratio uses :
   ${ζ}_{region} = \frac{∇ ⋅ {{V}^{⇀}}_{measured}}{∇ ⋅ {{V}^{⇀}}_{expected}} ,$
where *ζ_{region}* is the vector field divergence ratio, ${{V}^{⇀}}_{expected}$ is the expected vector field, ${{V}^{⇀}}_{measured}$ is the actual vector field.

Other features of this aspect may be consistent with the features of the other aspects, including updating the expected vector field periodically, updating the expected vector field at a rate synchronised with updating the actual vector field, etc.

The various aspects may be summarised as follows.

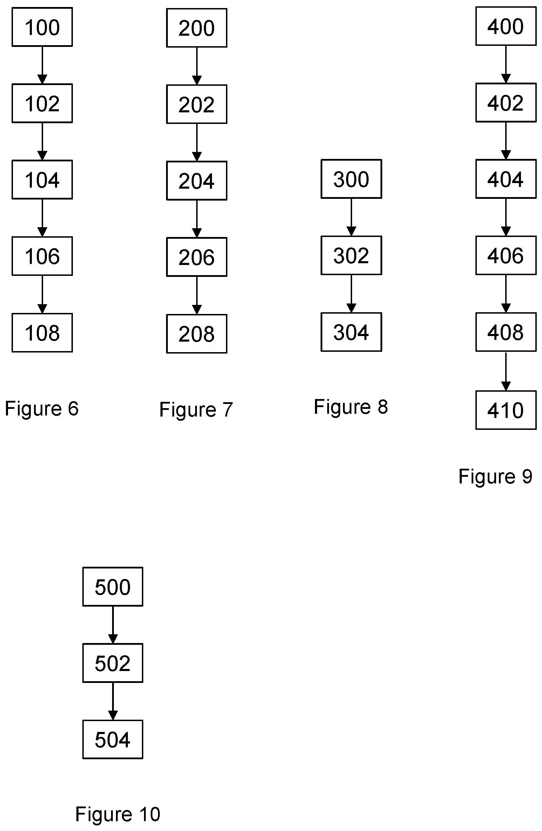

With reference to Figure 6, there is provided a computer-implemented method of identifying a static object. The method comprises: generating 100 an expected vector field representing a movement of an environment in front of a vehicle, relative to the vehicle; capturing 102 a plurality of image frames of the environment as the vehicle moves into the environment; calculating 104 an actual vector field of the environment from the plurality of images; identifying 106 a region in the actual vector field having vectors aligned with vectors of a corresponding region in the expected vector field, the vectors of the region of the actual vector field having substantially the same magnitude scaling factor; and classifying 108 the identified region as a static object.

With reference to Figure 7, there is provided a computer-implemented method of identifying a moving object. The computer-implemented method comprises: generating 200 an expected vector field representing the anticipated relative movement of environment in front of a vehicle; capturing 202 a plurality of image frames of the environment as the vehicle moves into the environment; calculating 204 an actual vector field of the environment from the plurality of images; identifying 206 a region in the actual vector field that is not aligned with the corresponding region in the expected vector field; and classifying 208 the identified region as a moving object.

With reference to Figure 8, there is provided a computer-implemented method of computer-implemented method of extracting a static object from an image. The computer-implemented method comprising: identifying 300 a static object or a dynamic object using the computer-implemented method summarised above; generating 302 a semantic segmentation map to segment the static object from the image frame; and extracting 304 the segmented static object from the image.

With reference to Figure 9, there is provided a computer-implemented method of estimating a velocity of a moving object. The computer-implemented method comprises: receiving 400 a plurality of images from a camera mounted to an entity moving through an environment; estimating 402 an expected vector field representing an expected velocity of an environment relative the entity; calculating 404 an actual vector field from the plurality of images, the actual vector field representing an actual velocity of the environment relative to the entity; 406 identifying a region in the actual vector field that is not aligned with a corresponding region in the expected vector field as an object; identifying 408 a differential vector field for the identified region and a dimension associated with the identified region; and estimating 410 the velocity of the identified object based on the differential vector field and the dimension associated with the identified region.

With reference to Figure 10, according to an aspect of the present disclosure, there is provided a computer-implemented method of constructing a three-dimensional point cloud. The method comprises: identifying 500 an object using any of the foregoing methods; identifying 502 a position of the static object; and constructing 504 the three-dimensional point cloud including a plurality of points at the position of the object. The object may be the static object or the moving object.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.
Elements of the present disclosure may be understood with reference to the following clauses.
Clause 1. A computer-implemented method of identifying a moving object, the computer-implemented method comprising: generating an expected vector field representing the anticipated relative movement of environment in front of a vehicle; capturing a plurality of image frames of the environment as the vehicle moves into the environment; calculating an actual vector field of the environment from the plurality of images; identifying a region in the actual vector field that is not aligned with the corresponding region in the expected vector field; and classifying the identified region as a moving object.
Clause 2. The computer-implemented method of Clause 1, further comprising: updating the expected vector field periodically.
Clause 3. The computer-implemented method of Clause 2, further comprising updating the expected vector field at a rate synchronised with updating the actual vector field.
Clause 4. The computer-implemented method of any preceding clause, wherein the expected vector field and/or the actual vector field includes a direction and a magnitude for respective changes in positions of respective points in the environment over a time between image frames.
Clause 5. The computer-implemented method of any preceding clause, wherein generating an expected vector field comprises: generating the expected vector field based on a dynamic parameter of the vehicle and a camera property.
Clause 6. The computer-implemented method of Clause 5, wherein the dynamic parameter of the vehicle is one of a speed of the vehicle, an acceleration of the vehicle, a heading of the vehicle, and a turn radius of the vehicle.
Clause 7. The computer-implemented method of Clause 5 or Clause 6, wherein the camera property includes at least one of a frame rate and a lens.
Clause 8. The computer-implemented method of any preceding clause, wherein generating an actual vector field comprises: identifying points in an image frame of the plurality of image frames; identifying the points in a next image frame of the plurality of image frames; and calculating a change in position of the points between the image frame and the next image frame.
Clause 9. The computer-implemented method of Clause 8, wherein the points include points selected from a list of points including: an edge, a corner, and an object feature and a colour
Clause 10. The computer-implemented method of any preceding clause, further comprising: identifying sudden changes in differences in the identified region.
Clause 11. A computer-implemented method of extracting a moving object from an image, the computer-implemented method comprising: identifying a moving object using the computer-implemented method according to any preceding clause; generating a semantic segmentation map to segment the moving object from the image frame; and extracting the segmented moving object from the image.
Clause 12. A computer-implemented method of constructing a three-dimensional point cloud, the computer-implemented method comprising: identifying a moving object using the computer-implemented method according to any of Clauses 1 to 10; identifying a position of the moving object; and constructing the three-dimensional point cloud including a plurality of points at the position of the moving object
Clause 14. A computer-implemented method of estimating a velocity of a moving object, the computer-implemented method comprising: receiving a plurality of images from a camera mounted to an entity moving through an environment; estimating an expected vector field for pixel motion in the plurality of images, the expected vector field representing an expected velocity of the environment relative to the entity; calculating an actual vector field from the plurality of images, the actual vector field representing an actual velocity of the environment relative to the entity; identifying a region in the actual vector field that is not aligned with a corresponding region in the expected vector field as a moving object; identifying a differential vector field for the identified region and a dimension associated with the identified region; and estimating the velocity of the identified object based on the differential vector field and the dimension associated with the identified region.
Clause 15. The computer-implemented method of Clause 14, further comprising: estimating a divergence in the differential vector field, wherein estimating the velocity of the identified object based on the differential vector field comprises: estimating the velocity of the identified object based on the divergence in the differential vector field.
Clause 16. The computer-implemented method of Clause 14 or Clause 15, further comprising: classifying the identified object using a classification algorithm.
Clause 17. The computer-implemented method of Clause 3, wherein the dimension associated with the region is an estimated distance to the identified region, wherein estimating the distance to the identified region uses: ${d}_{region} = β \frac{{L}_{object}}{{L}_{region}} ,$ where *d_{region}* is the estimated distance to the region, *L_{region}*is a dimension of the object in the plurality of images, *L_{object}* is a dimension of the object obtained using known information about the classified object, and *β* is a camera specific scaling factor. Clause 18. The computer-implemented method of any preceding clause, further comprising: discounting the region if the region has a smaller size than a classification threshold
Clause 19. The computer-implemented method of any preceding clause, wherein calculating a relative transverse speed of the identified object uses: ${v}_{region ⊥} = {ψ}_{region} ∗ \frac{{d}_{region}}{{d}_{expected}} ,$ where *ψ_{region}* is an uncalibrated relative transverse speed of the object, *v*_{*region*⊥} is the expected relative transverse velocity of the object, *d_{region}* is the estimated distance to the region, and *d_{expected}* is an expected distance to the region.
Clause 20. The computer-implemented method of Clause 19, further comprising: calculating the uncalibrated relative transverse speed of the object using: ${ψ}_{region ⊥} = \left|{{V}^{⇀}}_{measured}\right| - \left|{{V}^{⇀}}_{expected}\right|$ where *ψ*_{*region*⊥} is the uncalibrated relative transverse speed of the object, ${{V}^{⇀}}_{expected}$ is the expected vector field, and ${{V}^{⇀}}_{measured}$ is the actual vector field Clause 21. The computer-implemented method of any preceding claim, wherein calculating a relative longitudinal speed of the identified region uses: ${v}_{\left.region\right‖} = {v}_{expected} ⋅ {ζ}_{region} ⋅ \frac{{d}_{region}}{{d}_{expected}} ,$ where *ζ_{region}* is a vector field divergence ratio of the region, *v_{expected}*is an expected relative longitudinal speed of the object, *v_{region}*is an estimated relative longitudinal speed of the object, and *d_{region}* is the estimated distance to the region, and *d_{expected}* is an expected distance to the region.
Clause 22. The computer-implemented method of Clause 21, wherein calculating the vector field ratio uses : ${ζ}_{region} = \frac{∇ ⋅ {{V}^{⇀}}_{measured}}{∇ ⋅ {{V}^{⇀}}_{expected}} ,$ where *ζ_{region}* is the vector field divergence ratio, ${{V}^{⇀}}_{expected}$ is the expected vector field, ${{V}^{⇀}}_{measured}$ is the actual vector field.
Clause 23. The computer-implemented method of any preceding claim, further comprising:
   updating the expected vector field periodically.
Clause 24. The computer-implemented method of Clause 10, further comprising updating the expected vector field at a rate synchronised with updating the actual vector field.
Clause 25. The computer-implemented method of any preceding clause, wherein the expected vector field and/or the actual vector field includes a direction and a magnitude for respective velocities of respective points in the environment over a time between image frames.
Clause 26. The computer-implemented method of any preceding clause, wherein generating an expected vector field comprises: generating the expected vector field based on a dynamic parameter of the vehicle and a camera property.
Clause 27. The computer-implemented method of Clause 13, wherein the dynamic parameter of the vehicle is one of a speed of the vehicle, an acceleration of the vehicle, a heading of the vehicle, and a turn radius of the vehicle, and optionally wherein the camera property includes at least one of a frame rate and a lens.
Clause 28. The computer-implemented method of any of Clauses 14 to 27, wherein generating an actual vector field comprises: identifying points in an image frame of the plurality of image frames; identifying the points in a next image frame of the plurality of image frames; and calculating a change in position of the points between the image frame and the next image frame.
Clause 29. computer-implemented method of Clause 28, wherein the points include points selected from a list of points including: an edge, a corner, and an object feature and a colour.
Clause 30. The computer-implemented method of any of Clauses 14 to 29, further comprising: identifying sudden changes in differences in the identified region.
Clause 31. A computer-implemented method of identifying a static object, the computer-implemented method comprising: generating an expected vector field representing a movement of an environment in front of a vehicle, relative to the vehicle; capturing a plurality of image frames of the environment as the vehicle moves into the environment; calculating an actual vector field of the environment from the plurality of image frames; calculating a scalar field of vector scaling factors of the actual vector field with reference to the expected vector field; grouping regions of the scalar field having substantially the same scaling factor; identifying a region of the grouped regions having vectors substantially aligned between the actual and expected vector fields; and classifying the identified region as a static object.
Clause 32. The computer-implemented method of Clause 31, further comprising: calculating a distance to the identified region based on an expected distance to the region and the vector scaling factor.
Clause 33. The computer-implemented method of Clause 32, wherein calculating the distance to the identified region based on the expected distance to the region and the scaling factor comprises using : ${d}_{region} = {d}_{expected} ⋅ γ ,$ where *d_{region}* is the actual distance to the region, *d_{expected}* is the expected distance to the region, and y is the vector scaling factor.
Clause 34. The computer-implemented method of Clause 33, further comprising: calculating the vector scaling factor, y, using: $γ = \frac{\left|{{V}^{⇀}}_{expected}\right|}{\left|{{V}^{⇀}}_{measured}\right|} ,$ wherein ${{V}^{⇀}}_{expected}$ is the expected vector field, and ${{V}^{⇀}}_{measured}$ is the actual vector field..
Clause 35. The computer-implemented method of any preceding clause, further comprising: updating the expected vector field periodically.
Clause 36. The computer-implemented method of Clause 35, further comprising updating the expected vector field at a rate synchronised with updating the actual vector field.
Clause 37. The computer-implemented method of any of Clauses 31 to 36, wherein the expected vector field and/or the actual vector field includes a direction and a magnitude for respective changes in positions of respective points in the environment over a time between image frames.
Clause 38. The computer-implemented method of any of Clauses 31 to 37, wherein generating an expected vector field comprises: generating the expected vector field based on a dynamic parameter of the vehicle and a camera property.
Clause 39. The computer-implemented method of Clause 38, wherein the dynamic parameter of the vehicle is one of a speed of the vehicle, an acceleration of the vehicle, a heading of the vehicle, and a turn radius of the vehicle.
Clause 40. The computer-implemented method of Clause 38 or Clause 39, wherein the camera property includes at least one of a frame rate and a lens.
Clause 41. The computer-implemented method of any of Clauses 31 to 40, wherein generating an actual vector field comprises: identifying points in an image frame of the plurality of image frames; identifying the points in a next image frame of the plurality of image frames; and calculating a change in position of the points between the image frame and the next image frame.
Clause 42. The computer-implemented method of Clause 41, wherein the points include points selected from a list of points including: an edge, a corner, an object feature, and a colour.
Clause 43. The computer-implemented method of any of Clauses 31 to 42, further comprising: identifying sudden changes in differences in the identified region.
Clause 44. A computer-implemented method of extracting a static object from an image, the computer-implemented method comprising: identifying a static object using the computer-implemented method according to any of Clauses 31 to 43; generating a semantic segmentation map to segment the static object from the image frame; and extracting the segmented static object from the image.
Clause 45. A computer-implemented method of constructing a three-dimensional point cloud, the computer-implemented method comprising: identifying a static object using the computer-implemented method according to any of Clauses 31 to 44; identifying a position of the static object; and constructing the three-dimensional point cloud including a plurality of points at the position of the static object.
Clause 46. A transitory, or non-transitory, computer-readable medium having instructions stored thereon that when executed by at least one processor, causes the at least one processor to perform the computer-implemented method of any preceding clause.
Clause 47. A vehicle comprising: a camera for capturing images of an environment into which the vehicle is moving; at least one processor; and storage storing instructions that when executed by the at least one processor causes the at least one processor to perform the computer-implemented method of any of Clauses 1 to 45.

## Claims

1. A computer-implemented method of identifying a static object, the computer-implemented method comprising:
generating an expected vector field representing a movement of an environment in front of a vehicle, relative to the vehicle;
capturing a plurality of image frames of the environment as the vehicle moves into the environment;
calculating an actual vector field of the environment from the plurality of image frames;
calculating a scalar field of vector scaling factors of the actual vector field with reference to the expected vector field;
grouping regions of the scalar field having substantially the same scaling factor;
identifying a region of the grouped regions having vectors substantially aligned between the actual and expected vector fields; and
classifying the identified region as a static object.

2. The computer-implemented method of Claim 1, further comprising:
calculating a distance to the identified region based on an expected distance to the region and the vector scaling factor.

3. The computer-implemented method of Claim 3, wherein calculating the distance to the identified region based on the expected distance to the region and the scaling factor comprises using : ${d}_{region} = {d}_{expected} ⋅ γ ,$ where *d_{region}* is the actual distance to the region, *d_{expected}* is the expected distance to the region, and y is the vector scaling factor.

4. The computer-implemented method of Claim 3, further comprising:
**calculating** the vector scaling factor, y, using: $γ = \frac{\left|{{V}^{⇀}}_{expected}\right|}{\left|{{V}^{⇀}}_{measured}\right|} ,$
wherein ${{V}^{⇀}}_{expected}$ is the expected vector field, and ${{V}^{⇀}}_{measured}$ is the actual vector field..

5. The computer-implemented method of any preceding claim, further comprising:
updating the expected vector field periodically.

6. The computer-implemented method of Claim 5, further comprising updating the expected vector field at a rate synchronised with updating the actual vector field.

7. The computer-implemented method of any preceding claim, wherein the expected vector field and/or the actual vector field includes a direction and a magnitude for respective changes in positions of respective points in the environment over a time between image frames.

8. The computer-implemented method of any preceding claim, wherein generating an expected vector field comprises:
generating the expected vector field based on a dynamic parameter of the vehicle and a camera property.

9. The computer-implemented method of Claim 8, wherein the dynamic parameter of the vehicle is one of a speed of the vehicle, an acceleration of the vehicle, a heading of the vehicle, and a turn radius of the vehicle.

10. The computer-implemented method of Claim 8 or Claim 9, wherein the camera property includes at least one of a frame rate and a lens.

11. The computer-implemented method of any preceding claim, wherein generating an actual vector field comprises:
identifying points in an image frame of the plurality of image frames;
identifying the points in a next image frame of the plurality of image frames; and
calculating a change in position of the points between the image frame and the next image frame.

12. The computer-implemented method of Claim 11, wherein the points include points selected from a list of points including: an edge, a corner, an object feature, and a colour.

13. The computer-implemented method of any preceding claim, further comprising:
identifying sudden changes in differences in the identified region.

14. A computer-implemented method of extracting a static object from an image, the computer-implemented method comprising:
identifying a static object using the computer-implemented method according to any preceding claim;
generating a semantic segmentation map to segment the static object from the image frame; and
extracting the segmented static object from the image.

15. A computer-implemented method of constructing a three-dimensional point cloud, the computer-implemented method comprising:
identifying a static object using the computer-implemented method according to any of Claims 1 to 13;
identifying a position of the static object; and
constructing the three-dimensional point cloud including a plurality of points at the position of the static object.

16. A vehicle comprising:
a camera for capturing images of an environment into which the vehicle is moving;
at least one processor; and
storage storing instructions that when executed by the at least one processor causes the at least one processor to perform the computer-implemented method of any of Claims 1 to 15.
